# FASCICULE DE BREVET EUROPEEN

(11) **EP 4 364 278 B1**
(45) Date de publication et mention de la délivrance du brevet: **02.07.2025**
(21) Numéro de dépôt: 22747589.4
(22) Date de dépôt: 17.06.2022
(51) Int. Cl.: H02K 3/50, H02K 3/52, H02K 5/22, H02K 9/19, H02K 11/33, H02K 15/12, H02K 5/10, H02K 5/12

(54) **ENSEMBLE POUR UN INTERCONNECTEUR D'UNE MACHINE ÉLECTRIQUE ET LA MACHINE COMPRENANT L'INTERCONNECTEUR**
ANORDNUNG FÜR EINEN INTERKONNEKTOR EINER ELEKTRISCHEN MASCHINE UND MASCHINE MIT DEM INTERKONNEKTOR
ASSEMBLY FOR AN INTERCONNECTOR OF AN ELECTRIC MACHINE AND MACHINE COMPRISING THE INTERCONNECTOR

(30) Priorité: 29.06.2021 FR 2106988
(43) Date de publication de la demande: 08.05.2024
(73) Titulaire: Valeo Electrification, 95800 Cergy (FR)
(72) Inventeur: HAYASHI, Rafael, 38070 St Quentin Fallavier (FR); BRUYERE, Baptiste, 38070 St Quentin Fallavier (FR); SANCHEZ, José, 38070 St Quentin Fallavier (FR); ZANELLA, Charlie, 38070 St Quentin Fallavier (FR); VAPILLON, Loic, 38070 St Quentin Fallavier (FR); KEBBACHE, Abdelaziz, 94046 Créteil Cedex (FR); SELOSSE, Didier, 62630 Etaples-sur-Mer (FR); BADEY, Jean Philippe, 62630 Etaples-sur-Mer (FR); KUPPUSAMY, Venkatesan, Chennai, Tamil Nadu 600130 (IN); PATEY, Frederic, 38070 St Quentin Fallavier (FR)
(74) Mandataire: Valeo Powertrain Systems
(86) Numéro de dépôt international: PCT/EP2022/066555
(87) Numéro de publication internationale: WO 2023/274751

(56) Documents cités:
- EP-A2- 1 361 644
- DE-A1- 19 646 617
- JP-A- 2002 005 019
- JP-U- H0 720 060
- JP-U- S55 112 463
- US-A1- 2020 195 079
- US-B2- 7 211 914

## Description

### DOMAINE TECHNIQUE DE L'INVENTION

Le domaine technique de l'invention est celui des machines électriques tournantes refroidis par un fluide, telles qu'un alterno-démarreur ou une machine réversible ou un moteur électrique pour un dispositif mobile à autopropulsion.

Dans la suite, par dispositif mobile à autopropulsion, on entend un véhicule pour transporter des marchandises ou des personnes, qui comprend son système de traction pour se déplacer tel que le moteur thermique ou électrique d'une voiture, camion, d'un vélo ou d'un objet qui se déplace avec son système de traction tel qu'un drone. Un tel dispositif mobile à autopropulsion peut en outre comprendre une conduite autonome.

La présente invention concerne l'étanchéité au niveau de l'interconnecteur et en particulier un ensemble pour un interconnecteur pour raccorder des sorties de phases du stator à une unité de commande de la machine.

### ARRIERE-PLAN TECHNOLOGIQUE DE L'INVENTION

Les machines électriques tournantes comprennent un stator, un rotor qui en fonctionnement génèrent une grande quantité de chaleur.

Le stator comporte un paquet de tôles doté d'encoches équipées d'isolants d'encoches pour le montage du bobinage du stator. Le bobinage comporte une pluralité d'enroulements de phase insérés dans les encoches du paquet de tôles et sont obtenus par exemple à partir d'un fil continu recouvert d'émail ou à partir d'éléments conducteurs en forme de barre, tels que des épingles en forme de U ou I. Ces enroulements de phases sont par exemple des enroulements triphasés qui sont connectés en étoile ou en triangle, dont les sorties de phase sont reliées par le biais d'un boitier interconnecteur à une électronique de puissance. Les extrémités de chaque sortie de phase est reliée à une extrémité de connexion d'une trace du boitier interconnecteur reliée à l'électronique de puissance.

Lorsqu'un courant circule dans les enroulements, cela entraine de la chaleur due à une résistance de chaque bobine du bobinage, appelé effet Joule ou pertes Joule. De manière générale, plus la machine électrique comprend une puissance (électrique ou mécanique) importante, plus les enroulements produisent de la chaleur.

Le rotor peut comprendre des aimants, le rotor étant entouré par le stator, chaque aimant chauffe sous l'effet de la température du stator qui affecte aussi les performances des aimants.

Pour éviter un échauffement excessif de la bobine du stator et des aimants du rotor, il est connu des machines électriques refroidis par un liquide pour augmenter l'efficacité du refroidissement afin d'améliorer le rendement et la puissance mécanique maximale de la machine par un liquide, tel que de l'huile ou de l'eau glycolée ayant un meilleur transfert de chaleur s'écoulant autour du stator pour le refroidir. Cependant ces machines nécessitent un circuit hydraulique complexe et couteux, c'est en particulier dû aux problèmes d'étanchéités liées aux dilatations et vibrations de ces machines.

Par exemple, il est connu des machines électriques dans lequel le rotor et le stator baigne dans le liquide de refroidissement. Le fil continu ou les éléments conducteurs en forme de barre comprend un isolant dans le stator, mais la zone de connexion entre les extrémités des sorties de phases raccordées par une soudure aux extrémités de connexion des traces du boitier interconnecteur nécessitent d'être dénudées avant la soudure. Il est donc nécessaire de rendre étanche cette zone de connexion au fluide de refroidissement qui pourrait engendrer des courts-circuits et/ou des corrosions de ses sorties de phases ainsi que des extrémités de connexion.

Il est connu alors de produire un logement de connexion étanche, appelé dans la suite logement de connexion, pour chaque zone de connexion en utilisant une membrane souple fermant une ouverture du palier traversée par une sortie de phase formant le fond du logement de connexion étanche. Le boitier interconnecteur comprend un corps surmoulant la trace prenant en sandwich la membrane souple avec le palier. Le corps du boitier interconnecteur comprend une ouverture du logement de connexion à travers lequel sort l'extrémité de connexion. Le logement de connexion loge donc la zone de connexion comprenant la portion dénudée de la sortie de phase et de l'extrémité de connexion et la soudure. La soudure est de préférence réalisée avant de former un contour du logement de connexion pour simplifier le procédé de soudure et éviter d'endommager le contour de ce logement. Après la soudure, le logement de connexion comprend un réservoir monté sur le corps du boitier interconnecteur, formant le contour en entourant la zone de connexion qui est remplie de résine pour empêcher le liquide de refroidissement de venir en contact avec la zone de connexion. Cette résine est donc insérée dans un état liquide dans le logement de connexion étanche puis se durcie ensuite permettant ainsi d'étanchéifier la zone de connexion dans le logement de connexion.

Cependant, un tel logement de connexion étanche comporte des risques de fuites de la résine lorsqu'elle est à l'état liquide vers l'extérieur du logement.

Notamment, des fuites de la résine à l'état liquide peuvent se produire entre chaque pièce formant le logement de connexion ainsi qu'entre la membrane souple traversée par la sortie de phase et la sortie de phase. Par exemple des fuites de la résine entre la membrane souple et le corps du boitier ou encore entre le réservoir et le corps du boitier interconnecteur.

En outre, il existe des difficultés de maintenir la membrane souple lors de l'insertion des sorties de phases pouvant notamment entraîner des déplacements, des déchirures ou/et des étirements de la membrane souple et donc des fuites de la résine à l'état liquide lors de l'étape de remplissage de résine.

La résine sortie du logement de connexion va durcir et peut entrainer des dommages importants sur la machine électrique. Par exemple si la résine se durcit dans l'entrefer, le rotor peut rester bloquer ou encore si la résine se durcit dans une entrée ou sortie du circuit du liquide de refroidissement cela peut empêcher ou diminuer la circulation du liquide de refroidissement dans la machine électrique.

Enfin un tel logement de connexion nécessite de réaliser le logement de connexion à l'extérieure du palier (l'intérieur étant du côté du stator) pouvant entraîner des difficultés de réalisations pour certaines machines électriques.

Il existe donc un besoin d'avoir un logement de connexion plus simple pour le montage tout en réduisant le risque de fuite de la résine lorsque celle-ci est à l'état liquide.
Le document US 7 211 914 B2 divulgue un système d'interconnexion.

### RESUME DE L'INVENTION

L'invention offre une solution à au moins un des problèmes évoqués précédemment, en permettant d'avoir un ensemble préassemblé pour former un interconnecteur ayant une connexion aux sortie de phase d'une bobine étanchéifiée par une résine, destiné à être monté sur un palier d'une machine électrique refroidie par un liquide, comprenant un corps d'appui différant du palier, un corps d'interconnecteur et un joint monté comprimé entre le corps d'appui et le boitier interconnecteur pour permettre de pouvoir être indépendant du palier de la machine tout en fiabilisant l'étanchéité.

Un aspect de l'invention concerne un ensemble pour un interconnecteur destiné à être monté sur une pièce de support tel qu'un palier d'une machine électrique refroidie par un liquide, pour connecter des sorties de phase d'un bobinage à une électronique de puissance, comprenant:
- un boitier interconnecteur comprenant :
- un corps comprenant au moins une ouverture de logement de connexion traversante destinée à être remplie de résine et traversée par une sortie de phase,
- au moins une trace par phase comprenant chacune une extrémité de connexion pour être connectée à la sortie de phase dans un logement de connexion,

- au moins un corps d'appui différant d'un palier, fixé au boitier interconnecteur comprenant au moins un passage de sortie de phase,
- au moins un joint d'étanchéité monté comprimé entre le corps d'appui et le boitier interconnecteur et comprenant :
   - au moins une ouverture d'étanchéité de sortie de phase en vis-à-vis d'un passage de sortie de phase et en vis-à-vis d'une ouverture de logement de connexion du boitier d'interconnecteur.

Grâce à l'invention, le joint comprenant l'ouverture d'étanchéité de sortie de phase est monté et comprimé entre un corps d'appui et le corps de connecteur avant même d'être monté sur un palier de la machine. Ainsi on réduit voir élimine le risque que le joint ne se déplace ou/et se déchire ou/et se déforme lors de l'insertion de la sortie de phase à travers son ouverture d'étanchéité. En outre, le pré-assemblage de cet ensemble permet de diminuer les coût et temps de montage de l'interconnecteur sur le palier. Enfin le fait d'avoir le support d'appui différent du palier permet de simplifier la fabrication de certaine machine en incorporant l'interconnecteur sur le palier du côté interne de la machine et/ou du côté externe de la machine.

Outre les caractéristiques qui viennent d'être évoquées dans le paragraphe précédent, l'ensemble pour un interconnecteur selon un aspect de l'invention peut présenter une ou plusieurs caractéristiques complémentaires parmi les suivantes, considérées individuellement ou selon toutes les combinaisons techniquement possibles :
- Selon un mode de réalisation l'extrémité de connexion est située au moins en partie dans l'ouverture de logement de connexion du corps. Cela permet de d'aligner la sortie de phase avec l'extrémité de connexion au moment de la soudure, voir même de guider et ajuster la position de la sortie de phase permettant d'avoir des conditions de soudure plus répétables. En effet, cela permet de réduire l'écart entre la sortie de phase et l'extrémité de connexion (voir en le supprimant).
- Selon un mode de réalisation, le passage de sortie de phase est une ouverture de guidage d'une seule sortie de phase en vis-à-vis d'une seule ouverture d'étanchéité. Cela permet de guider la sortie de phase vers l'ouverture d'étanchéité du joint lors de l'installation de l'ensemble au stator et donc de diminuer le risque de déchirement du joint.
- Selon un exemple de ce mode de réalisation, le corps d'appui comprend des parois de guidage entourant le passage de sortie de phase. Cela permet d'éviter que l'extrémité de sortie de phase viennent accrocher le bord d'appui et donc de mieux guider la sortie de phase vers l'ouverture d'étanchéité du joint. Les parois de guidage peuvent être conique ou de forme pyramidale tronquée, pour diminuer la section du passage de sortie de phase dans le sens d'insertion des sorties de phases vers le joint d'étanchéité.
- Selon un mode de réalisation, l'ensemble comprend au moins un moyen indexeur du corps d'appui avec le joint d'étanchéité et le boitier d'interconnecteur. Cela permet d'améliorer la disposition du joint par rapport au corps d'appui et le boitier interconnecteur et donc d'améliorer l'alignement de l'ouverture d'étanchéité avec le passage de sortie de phase et l'ouverture de logement de connexion.
- Selon un mode de réalisation, dans lequel le corps d'appui comprend des moyens de clipsage et le boitier d'interconnecteur comprend des moyens de clipsage complémentaire, pour être fixé l'un à l'autre. Les moyens de clipsage permettent un montage rapide tout en assurant une compression du joint d'étanchéité.
- Selon un exemple de ce mode de réalisation, le joint d'étanchéité comprend des ouvertures traversées par les moyens de clipsages pour fixer le corps d'appui au boitier d'interconnecteur en comprimant le joint d'étanchéité. Cela permet à chaque clip d'assurer une compression du joint tout en l'indexant.
- Selon un autre exemple de ce mode de réalisation, le joint d'étanchéité est positionné entre les moyens de clipsage. Cela permet de diminuer des risques de fuite par rapport à l'exemple précédent par les moyens de clipsage. Par exemple, les moyens de clipsage du corps d'appui et du boitier d'interconnecteur comprennent une paire de clips et de crochet, les bras de clips comprenant une ouverture pour se verrouiller avec le crochet. Cela permet de déclipser si nécessaire.
- Selon un exemple pouvant se combiner aux autres exemples de ce mode de réalisation, les moyens de clipsage comprennent un trou et un plot comprenant une extrémité élastiquement déformable ayant un diamètre externe supérieure au trou pour retenir le plot. Cela permet d'avoir un clipsage permanent et donc d'éviter un déclipsage involontaire. En particulier cet exemple permet de fonctionner dans l'exemple du joint comprenant des ouvertures traversées par les moyens de fixation en forme en l'occurrence de plot.
- Selon un mode de réalisation, le nombre de passages de sortie de phase dans l'au moins un corps d'appui est de six. Cela permet de guider chaque sortie de phase pour connecter les sorties de phase d'un système triphasé.
- Selon un mode de réalisation, le nombre d'ouvertures d'étanchéité dans le joint d'étanchéité est de six. Cela permet de connecter les sorties de phase d'un système triphasé.
- Selon un mode de réalisation, le nombre de corps d'appui est supérieur à un par exemple deux, et sont fixés au boîtier interconnecteur. Cela permet de simplifier le montage du corps d'appui dans le cas où les sorties de phases sont éloignées les unes des autres. C'est notamment le cas lors d'un double système triphasé.
- Selon un mode de réalisation, le nombre de joints d'étanchéité est de deux. Cela permet de simplifier le montage du corps d'appui dans le cas où les sorties de phases sont éloignées les unes des autres. C'est notamment le cas lors d'un double système triphasé.
- Selon un mode de réalisation, le nombre d'ouvertures de logement est égal au nombre d'ouvertures d'étanchéité. Cela permet que chaque ouverture de logement guide aussi la sortie de phase proche de l'extrémité de connexion. Ainsi cela permet d'aligner /ajuster la position de la sortie de phase avec l'extrémité de connexion au moment de la soudure.
- Selon un mode de réalisation, chaque ouverture de logement est en vis-à-vis de deux ouvertures d'étanchéité. Cela permet de simplifier le corps d'interconnecteur mais aussi le remplissage de résine.
- Selon un mode de réalisation, le boitier d'interconnecteur comprend une rainure de joint entourant l'ouverture de logement de connexion, à l'opposé du joint d'étanchéité, pour recevoir un joint de réservoir pour étanchéifier un logement de connexion d'un réservoir monté sur le boitier interconnecteur. Cela permet de réduire le risque de fuite entre le réservoir et le boitier d'interconnecteur. Cela permet de diminuer la taille du logement de connexion par rapport à celle du mode de réalisation suivant et donc de faire des économies en quantité de résine.
- Selon un mode de réalisation, le boitier d'interconnecteur comprend un muret formant une portion du volume du logement de connexion et une base ouverte sur chacune des ouvertures de logement de connexion ainsi qu'une rainure de joint entourant cette portion de volume de logement de réservoir, pour recevoir un joint de réservoir pour étanchéifier un logement de connexion d'un réservoir monté sur le boitier interconnecteur. Cela permet de réduire le risque de fuite entre le réservoir et le boitier d'interconnecteur et d'avoir moins de problème d'étanchéité par rapport à la solution précédent en ayant un seul joint pour plusieurs connexions entre une sortie de phase et une extrémité de connexion. En outre cela permet d'avoir un plus grand volume de résine et dont de disposer la résine plus facilement dans le logement de connexion pour la remplir.
- Selon un mode de réalisation, l'ensemble comprend en outre un réservoir destiné à être monté sur le corps interconnecteur comprenant un volume prolongeant l'ouverture de logement de connexion pour entourer une soudure entre la sortie de phase et l'extrémité de phase connexion et être remplie de résine et en ce que le réservoir comprend un moyen de fixation pour être fixé au corps d'interconnecteur. Cela permet de réaliser la soudure facilement sans ce réservoir.
- Selon un exemple de ce mode de réalisation le moyen de fixation est une contre-dépouille ou une cavité rétentive pour que la résine fixe le réservoir au corps d'interconnecteur lorsqu'elle est durcie. Cela permet d'utiliser la résine dans le logement lorsqu'elle a durci pour fixer le logement. Lors du procédé de remplissage de résine dans le logement de connexion, une pince peut maintenir le réservoir au corps d'interconnecteur jusqu'à ce que la résine ait durci.

Un autre aspect de l'invention concerne une machine électrique comprenant
- l'ensemble de l'invention décrit précédemment avec ou sans les différentes caractéristiques des modes de réalisations décrites précédemment,
- un stator comprenant des sorties de phases traversant chacune l'au moins un passage de sortie de phase correspondant, l'ouverture d'étanchéité correspondante et l'au moins une ouverture de logement de connexion correspondant, dans lequel chaque extrémité de sortie de phase est fixée à une extrémité de connexion correspondante,
- de la résine comblant l'ouverture de logement de connexion en contact avec le joint d'étanchéité formant un interconnecteur étanche.
- Selon un mode de réalisation de cette machine, l'interconnecteur étanche comprend un réservoir fixé sur le boitier d'interconnecteur formant un logement de connexion entourant au moins une sortie de phase fixée à une extrémité de connexion correspondante, le logement de connexion étant remplie de résine. Cela permet d'avoir de l'espace pour réaliser la soudure plus facilement puis de réaliser le logement de connexion après la soudure.
- Selon un exemple de ce mode de réalisation, le réservoir est fixé par des moyens de clipsage au boitier d'interconnecteur.
- Selon un autre exemple de ce mode de réalisation, le moyen de fixation du corps d'interconnecteur au réservoir comprend une contre-dépouille des parois du réservoir ou/et une cavité rétentive pour être fixé par la résine au corps d'interconnecteur 1.
- Selon un mode de réalisation, le stator et l'interconnecteur sont montés à l'aveugle dans la culasse comprenant à son extrémité le palier et en ce que le corps d'interconnecteur comprend un moyen de fixation en forme de doigt monté serré dans un logement du palier pour fixer l'interconnecteur au palier.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] montre une représentation schématique selon une vue tridimensionnelle d'un ensemble pour un interconnecteur selon un premier mode de réalisation.
[Fig. 2] montre une représentation schématique selon une autre vue tridimensionnelle de l'ensemble de la figure 1.
[Fig. 3] montre une représentation schématique d'une coupe d'une machine électrique comprenant l'ensemble de la figure 1.
[Fig. 4] montre une représentation schématique selon une vue tridimensionnelle d'un corps de réservoirs de l'ensemble de la figure 1.
[Fig. 5] montre une représentation schématique selon une vue tridimensionnelle d'un ensemble de la figure 1 dépourvue d'un corps d'appui de l'ensemble.
[Fig. 6] montre une représentation schématique selon une vue tridimensionnelle et une coupe d'un joint d'étanchéité de l'ensemble de la figure 1.
[Fig. 7a] montre une représentation schématique selon une vue tridimensionnelle du corps d'appui de l'ensemble de la figure 1.
[Fig. 7b] montre une représentation schématique selon une autre vue tridimensionnelle du corps d'appui de la figure 7a.
[Fig. 8] montre une représentation schématique selon une coupe d'une partie de l'ensemble de la figure 1.
[Fig. 9] montre une représentation schématique selon une vue tridimensionnelle d'un ensemble selon un deuxième mode de réalisation.
[Fig. 10] montre une représentation schématique selon une vue tridimensionnelle d'un interconnecteur étanche comprenant l'ensemble de la figure 9.
[Fig. 11] montre une représentation schématique d'une coupe d'une portion de l'ensemble de la figure 9.
[Fig. 12] montre une représentation schématique selon une vue de dessus d'une partie de l'ensemble de la figure 9.
[Fig. 13] montre une représentation schématique selon une vue tridimensionnelle d'une partie de l'ensemble de la figure 9.
[Fig. 14a] montre une représentation schématique d'une coupe d'un joint d'étanchéité de l'ensemble de la figure 9.
[Fig. 14b] montre une représentation schématique, selon une vue tridimensionnelle, du joint d'étanchéité de l'ensemble de la figure 9.

### DESCRIPTION DETAILLEE

Les figures sont présentées à titre indicatif et nullement limitatif de l'invention.

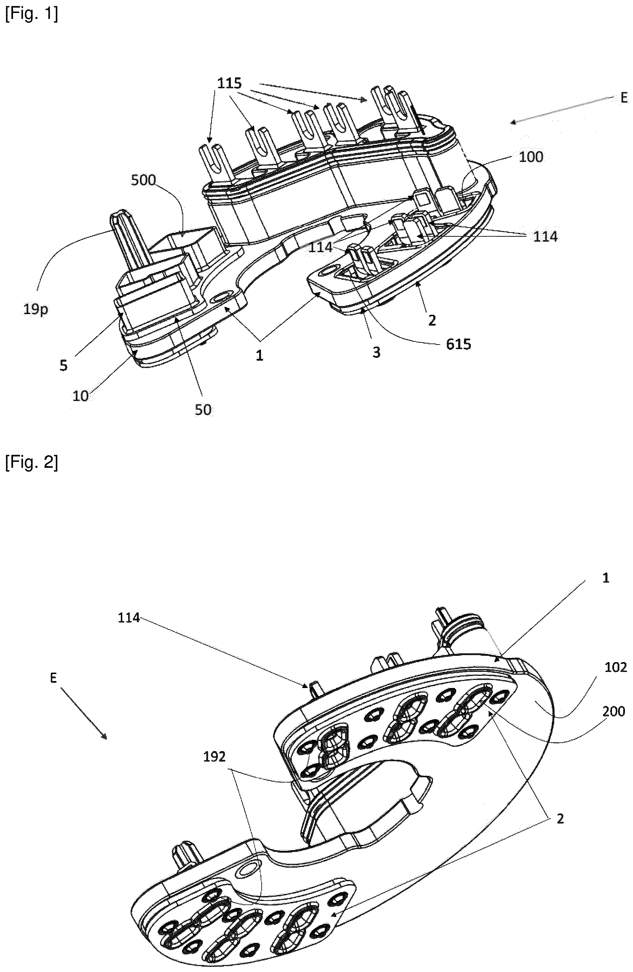

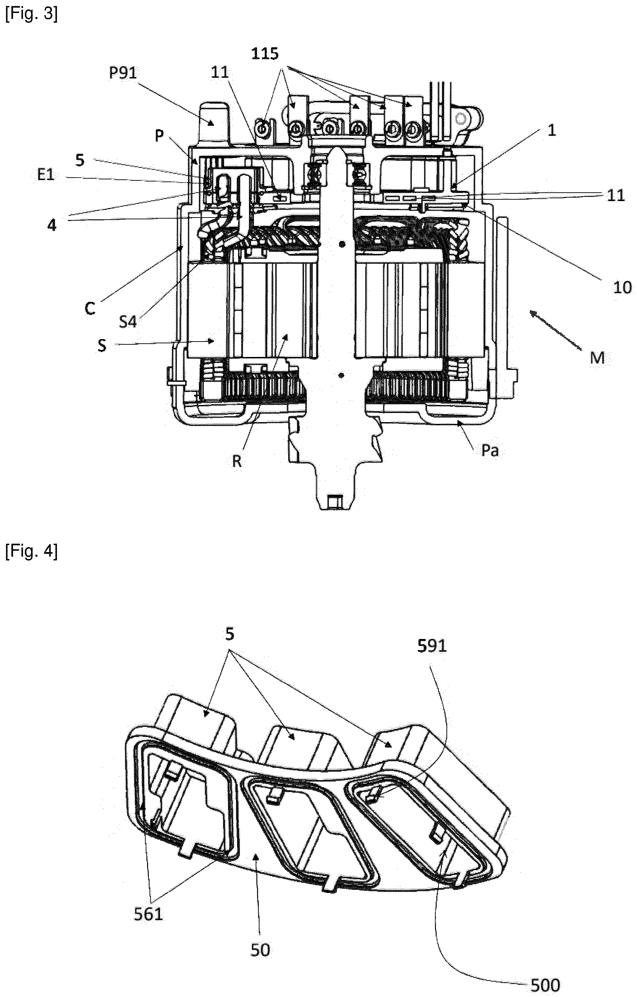

La figure 1 montre une représentation schématique d'un ensemble E et trois réservoirs 5 pour former un interconnecteur destiné à être monté sur un palier P d'une machine électrique M refroidie par un liquide, telle que celle représentée par exemple en coupe à la figure 3, pour connecter des sorties de phase 4 d'un bobinage S4 de la machine électrique M à une électronique de puissance.

L'ensemble E est un pré-assemblage d'un interconnecteur étanche destiné à être connecté à des sorties de phase 4 d'un bobinage et à recevoir de la résine pour étanchéifier la connexion. L'ensemble E comprend un boitier interconnecteur 1 comprenant un corps 10 comprenant au moins une ouverture de logement de connexion 100 traversante destinée à être remplie de résine. Dans cet exemple, le corps 10 comprend six ouvertures de logement de connexion 100 dont seulement trois sont visibles sur la figure 1.

En outre, le boitier interconnecteur 1 comprend au moins une trace 11, référencée sur la figure 3, en l'occurrence ici plusieurs traces 11 pour réaliser les connexions du bobinage S4 et notamment le raccordement des connexions du bobinage S4 à l'électronique de puissance. Chaque trace 11 comprend au moins une extrémité de connexion 114 pour être connectée à une sortie de phase 4 qui peut être un fil ou une épingle, de section ronde ou rectangulaire.

Parmi les traces 11, certaines ont une sortie de connexion 115 destinée à être raccordée à une connectique de l'électronique de puissance. Dans cet exemple le corps interconnecteur 10 est surmoulé sur les traces 11 pour deux systèmes triphasés phases. Il y a donc une trace de connexion par phase (ici en l'occurrence 6 phases) pour connecter chacune une sortie de phase 4 à une connectique d'une électronique de puissance destinée à être raccordée aux six sorties de connexion 115.

D'autres traces 11 sont destinées à réaliser des connexions entre des sorties de phases 4. Dans cet exemple, le montage de chaque système triphasé est en étoile. Il y a ici, deux traces 11 pour chaque neutre d'un système triphasé connectées ensemble par une sortie de phase 4 qui est soudée avec et entre deux extrémités de connexion 114 des deux traces comme cela est représentée sur la figure 1 par deux flèches partant de la référence 114. Les deux autres extrémités de chacune de ces deux traces sont connectées à une sortie de phase.

Bien entendu, le boitier interconnecteur pourrait comprendre moins ou plus de traces, par exemple il pourrait comporter six traces par système triphasé dont les phases sont montées en triangle.

Dans cet exemple, chaque extrémité de connexion 114 sort du corps 10 dans l'ouverture de logement de connexion 100 et s'étend pour être dans un logement de connexion 500 (expliqué ci-dessous) par le biais de son ouverture de logement de connexion 100, dont trois logements de connexion 500 sont représentés sur la figure 1 (représentés sur les trois autres ouvertures de logement de connexion 100 non visible sur la figure 1).

Selon un autre exemple non représenté, chaque extrémité de connexion 114 ne sort pas du corps 10 par l'ouverture de logement de connexion 100 mais comprend au moins une partie destinée à être dans un logement de connexion 500 débouchant sur une ouverture de logement de connexion 100.

Le logement de connexion 500 est formé dans ce mode de réalisation, par un réservoir 5 destiné à être monté sur le corps interconnecteur 10 après une soudure entre la sortie de phase 4 et l'extrémité de connexion 114 pour simplifier la soudure. Cependant, selon un autre exemple, le réservoir 5 pourrait directement faire partie du corps 10 (être monobloc).

Chaque réservoir 5 comprend donc un volume formant le logement de connexion 500 prolongeant l'ouverture de logement de connexion 100 pour entourer une soudure entre une sortie de phase 4 d'un bobinage de la machine électrique M et une extrémité de connexion 114. Ce volume formant le logement de connexion 500 est, après la soudure entre les sorties de phase 4 et les extrémités de connexion 114, remplie de résine dans un état liquide, qui se solidifie jusqu'à un état solide. Dans la suite on appel, Interconnecteur étanche E1 lorsque l'ensemble E a ses extrémités de connexion soudées aux sorties de phase 4 comme dans la figure 3 et que la résine est à l'état solide dans le logement de connexion 500. La résine n'est pas représentée sur les figures pour simplifier la représentation.

En l'occurrence, dans cet exemple, l'interconnecteur étanche E1 comprend deux corps de réservoirs 50, dont un est visible sur la figure 1 et sur la figure 4, comprenant plusieurs réservoirs 5, mais chaque réservoir 5 pourrait être indépendant.

Dans ce mode de réalisation, chaque réservoir 5 comprend des moyens de fixation 591 au corps d'interconnecteur 10 visible sur la figure 4 mais le corps de réservoirs 50 pourrait comprendre moins de moyens de fixation 591 au corps d'interconnecteur 10 que de réservoir 5.

Dans cet exemple, les moyens de fixations 591 sont des moyens de clipsage en l'occurrence des pattes flexibles comprenant un crochet pour se crocheter dans l'ouverture du logement de connexion 100. La résine non représentée comblant le logement de connexion 500 reste fixée en passant à l'état solide dans le logement de connexion 500 et en entourant l'extrémité de connexion 114, la soudure et la sortie de phase 4.

Selon un autre exemple, non représenté, les moyens de fixation 591 pour fixer le réservoir 5 au corps d'interconnecteur 10 peuvent être un collage ou encore aussi une contre-dépouille des parois du réservoir 5 pour être fixée par la résine au boitier d'interconnecteur 1 comme représenté dans le deuxième mode de réalisation expliquée dans la suite ou encore une cavité rétentive dans le logement de connexion 500 pour retenir le réservoir 5 au corps d'interconnecteur 1.

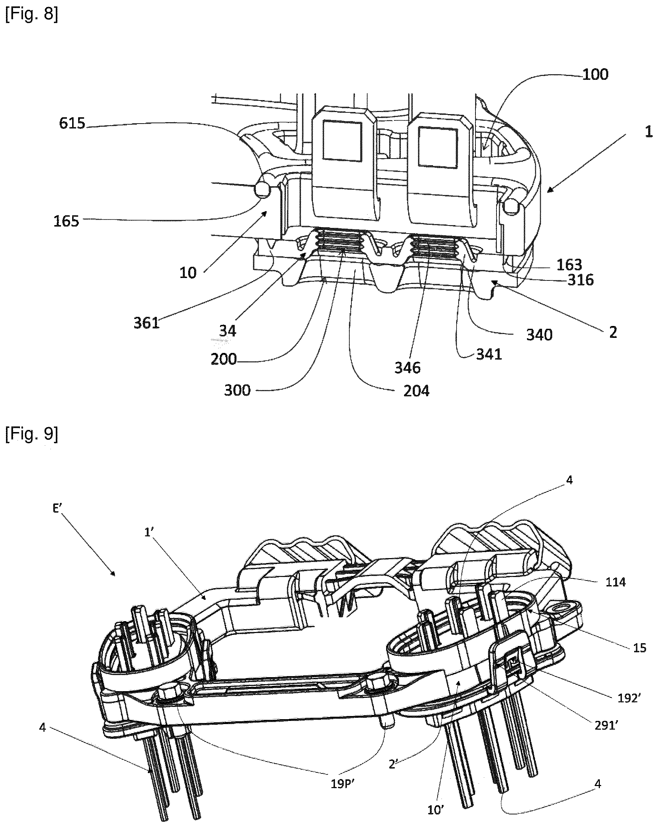

En outre, le corps d'interconnecteur 10 comprend au moins une rainure 165 de joint, visible sur la figure 8 représentant une coupe de l'ensemble E dans une ouverture de logement de connexion 100. Dans cet exemple, il y a une rainure de joint 165 par ouverture de logement de connexion 100. La rainure 165 entoure l'ouverture de logement de connexion 100, pour recevoir un joint 615, en l'occurrence torique. Chaque réservoir 5 comprend une rainure 561 visible sur la figure 4, pour recevoir le joint 615. L'interconnecteur étanche E1 comprend le joint 615 comprimé en sandwich entre la rainure 165 correspondant du boitier interconnecteur 1 et la rainure 561 du réservoir 5 correspondant.

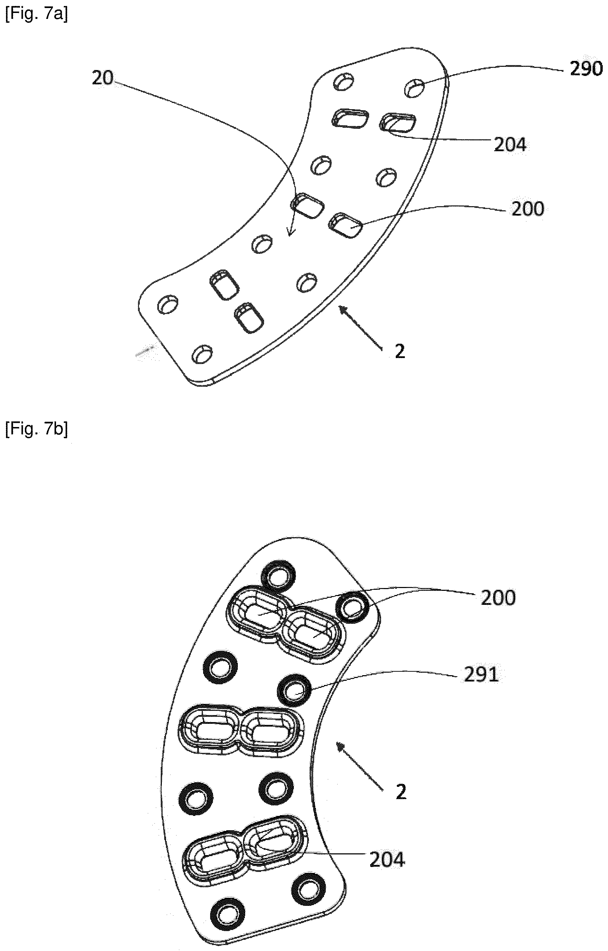

L'ensemble E comprend en outre au moins un corps d'appui 2, visible en particulier sur la figure 2 représentant l'ensemble selon une autre vue en perspective que celle de la figure 1 et sur les figures 7a et 7b.

Le corps d'appui 2 est différant du palier P de la machine électrique M, et est fixé au boitier interconnecteur 1. Par corps d'appui différent du palier, on entend que le corps d'appui 2 ne supporte pas un arbre rotor du rotor par un roulement contrairement au palier. Autrement dit, ici le corps d'appui 2 est une pièce amovible par rapport à la culasse ou le palier de la machine pour permettre d'avoir un ensemble d'interconnecteur préassemblé avant d'être monté sur une pièce telle que le palier de la machine électrique.

Le corps d'appui 2 comprend au moins un passage de sortie de phase 200 en vis-à-vis de l'ouverture de logement de connexion 100.

Sur la figure 3, on peut voir que le palier P supportant un arbre de rotation d'un rotor R de la machine électrique M s'étend de la culasse C et en ce que l'interconnecteur étanche E1 est monté axialement entre le palier P et la partie active de la machine électrique M comprenant le rotor R et le stator S. Dans cet exemple, comme visible sur cette figure 3, on peut voir qu'uniquement les sorties de connexion 115 des traces 11 sont situées à l'extérieur en traversant une ouverture du palier P. Par exemple, un joint peut être monté entre le corps d'interconnecteur 10 et le palier P dans l'ouverture pour réaliser l'étanchéité.

Dans cet exemple, dans un premier temps, l'ensemble interconnecteur E est glissée sur les sorties de phase jusqu'à appui sur le chignon puis on positionne cet ensemble pour permettre la bonne position sur les 3 axes avant l'étape de soudure et de remplissage de résine. Ensuite, le montage de la partie active (rotor R et stator S) et l'interconnecteur étanche E1 sont montés dans la culasse à l'aveugle en insérant l'arbre du rotor dans le palier P. Le corps d'interconnecteur 10 comprend un moyen de fixation 19P au palier P. Dans cet exemple, du fait du montage à l'aveugle et pour limiter les problèmes d'étanchéités, le moyen de fixation 19P est une tige de fixation à cran rentrant dans un logement de fixation P91 du palier 1 par un montage serré en déformant la tige de fixation 19P dans le logement P91. En outre cette tige peut permettre d'indexer angulairement l'ensemble E par rapport au palier P pour faire rentrer les sorties de connexion 115 jusqu'à ce que le corps d'interconnecteur 10 et son joint pénètrent dans l'ouverture du palier.

Une fois le stator S avec l'interconnecteur E1 (les sorties de phase 4 soudées aux extrémités de connexion 114) et le rotor R montés dans la culasse C, un palier avant Pa est monté contre la culasse C pour supporter le rotor R. Des tirants permettent de fixer le palier Pa au palier P en prenant en sandwich le stator S'.

L'ensemble E comprend aussi en outre au moins un joint d'étanchéité 3 comprimé entre le corps d'appui 2 et le boitier interconnecteur 1. Dans cet exemple, l'ensemble E comprend un joint d'étanchéité 3 et un corps d'appui 2 par système triphasé, soit ici deux joints d'étanchéités et deux corps d'appui 2.

Selon un autre exemple non représenté, l'ensemble E peut comporter qu'un seul joint d'étanchéité 3 pour les deux systèmes triphasés ou encore un joint d'étanchéité 3 par ouverture de logement de connexion 100. L'ensemble peut aussi selon un autre exemple comporter un corps d'appui 2 pour plusieurs joints d'étanchéité ou un corps d'appui 2 par joint d'étanchéité comme dans cet exemple.

Le corps d'appui 2 est dans ce mode de réalisation uniquement formé pour prendre en sandwich le joint d'étanchéité 3.

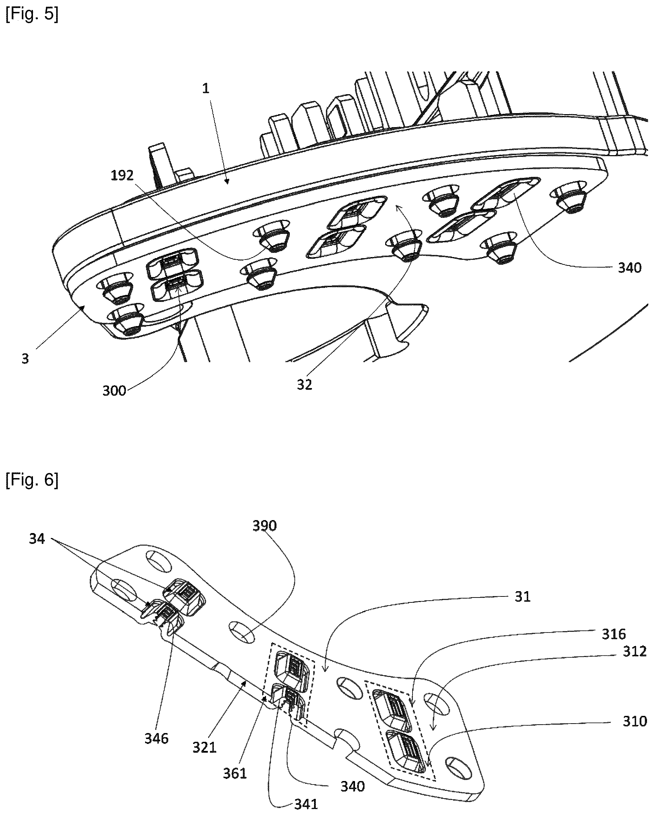

Le joint d'étanchéité 3 comprend au moins une ouverture d'étanchéité 300 par sortie de phase en vis-à-vis du passage de sortie de phase 200 et en vis-à-vis d'une ouverture de logement de connexion 100 du boitier d'interconnecteur 1. La figure 5 représente l'ensemble E dépourvu du corps d'appui 2 et la figure 6 représente le joint d'étanchéité 3 avec une coupe dans deux ouvertures d'étanchéité 300.

Dans ce mode de réalisation, il y a donc une ouverture de logement de connexion 100 pour deux ouvertures d'étanchéités 300.

L'ouverture d'étanchéité 300 est donc alignée avec le passage de sortie de phase 200 et l'ouverture de logement de connexion 100, pour permettre à la sortie de phase 4 de les traverser et être soudée à l'extrémité de connexion 114.

Le joint d'étanchéité 3, en particulier visible sur la figure 6 comprend un passe-fil 34 par ouverture d'étanchéité 300. Dans cet exemple de ce mode de réalisation, chaque passe-fil 34 comprend un soufflet 340 et une cheminée 341 entourant l'ouverture d'étanchéité 300 correspondante. Le soufflet 340 permet une souplesse de la cheminée 341 pour s'adapter aux vibrations, jeu de montage, déformation lors du montage, soudage entre la sortie de phase 4 et l'extrémité de connexion pour permettre une meilleure étanchéité lors du coulage de la résine dans le logement de connexion 500 remplissant cette ouverture de logement de connexion 300. Pour encore améliorer l'étanchéité au niveau de cette ouverture d'étanchéité 300, la cheminée 341 comprend des lèvres 346 s'étendant vers l'ouverture d'étanchéité 300 pour venir en contact avec la sortie de phases 4 correspondante.

En outre, pour améliorer l'étanchéité entre le joint d'étanchéité 3 et le corps d'interconnecteur 10, dans ce mode de réalisation, le joint d'étanchéité 3 comprend une portion déformée 361 représentée en pointillée de façon simplifiée sur la figure 6 et représentée comprimée sur la figure 8. Cette portion déformée 361 est plus comprimée qu'une portion intermédiaire 321 du joint d'étanchéité 3. La portion déformée 361 comprend au moins une surface déformée 316 par le corps d'interconnecteur 10 disposée du côté du corps d'interconnecteur 10. Cette surface déformée 316 est disposée tout autour de l'au moins une ouverture d'étanchéité 300 de sortie de phase 4, en l'occurrence dans ce mode de réalisation de deux ouvertures d'étanchéité 300.

Dans cet exemple le corps d'interconnecteur 10 comprend une surface plane 102 en vis-à-vis de la première surface 312 du joint d'étanchéité 3 et une saillie d'appui 163 (référencée et visible en coupe dans la figure 8) s'étendant de cette surface plane 102 tout autour du logement de connexion 100. La saillie d'appui 163 vient comprimer la portion déformée 361 en appui à l'opposé contre une surface plane 20 du corps d'appui 2, formant la surface déformée 361 en la déformant par rapport à la première surface 312 du joint d'étanchéité 3. Cette déformation forme une zone d'étanchéité pour empêcher la résine à l'état liquide de couler entre le joint d'étanchéité 3 et le boitier d'interconnexion 1. Chaque zone d'étanchéité entoure donc ici une ouverture de logement de connexion 100 ouvert sur deux ouvertures d'étanchéités 300, soit dans cet exemple une saillie d'appui 163 par phase pour entourer ses deux sorties de phase 4. Le joint d'étanchéité 3 comprend donc une face d'étanchéité 31 comprenant une surface de remplissage 310 entre les passe-fils 34 et la surface déformée 361 qui sera recouverte de résine lorsqu'elle sera introduite dans l'ouverture de logement de connexion 100. Le joint d'étanchéité 3 comprend donc une face d'appui 32 (référencée sur la figure 5) opposée à la face d'étanchéité 31 en vis-à-vis du corps d'appui 2.

Le joint d'étanchéité 3 comprend dans cet exemple de ce mode de réalisation des trous de passage de fixation 390 pour des moyens de de fixation du corps d'interconnecteur 10 au corps d'appui 2. Chacun des trous de passage de fixation 390 est situé entre les différentes zones d'étanchéités.

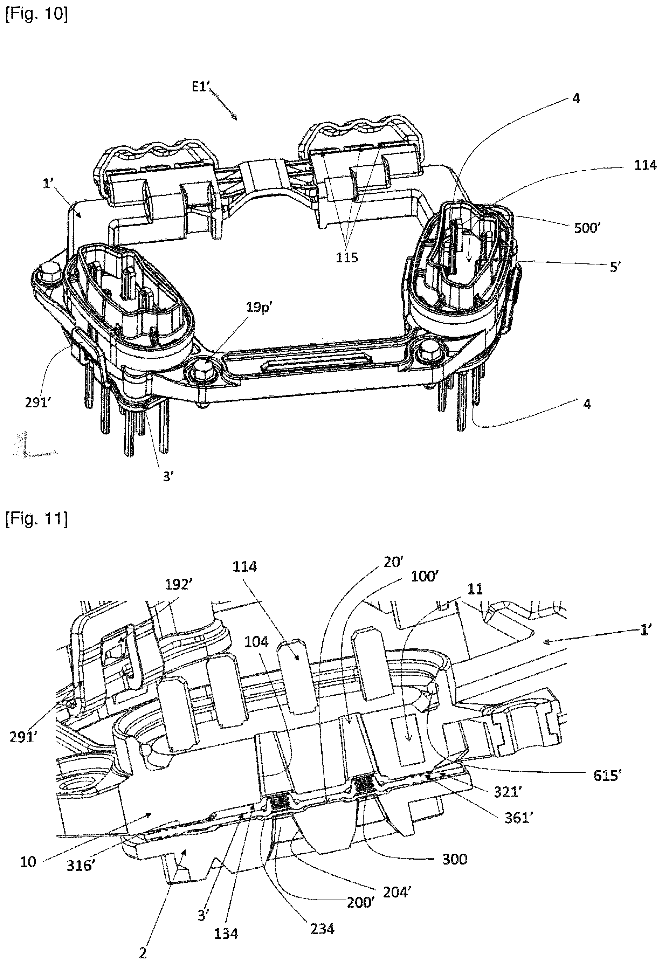

Dans ce mode de réalisation, les moyens de fixation du corps d'interconnecteur 10 au corps d'appui 2 sont des moyens de clipsages 192. En particulier le corps d'interconnecteur 10 comprend des moyens de clipsage 192 mâles qui sont complémentaires avec des moyens de clipsage 291 femelle du corps d'appui 2 visible sure la figure 7b et la figure 11.

Dans ce mode de réalisation, les moyens de clipsage 192 du boitier d'interconnecteur 1 sont des plots comprenant une extrémité élastiquement déformable, traversants chacun un des trous de fixation 390 du joint d'étanchéité 3, visible sur la figure 6, et traversant chacun un trou 290 du corps d'appui 2 de telle façon que l'extrémité élastiquement déformable a un diamètre externe supérieure au trou pour retenir le plot. En particulier dans cet exemple, le corps d'appui 2 comprend une rainure autour de chaque trou 290 formant ensemble un moyen de clipsage 291 pour retenir et empêcher que l'extrémité élastiquement déformable du plot puisse se redéformer pour sortir du trou 290.

Dans cet exemple, le corps d'appui 2 comprend une ouverture de passage 200 par ouverture d'étanchéité 300 soit une ouverture de passage 200 par sortie de phase 4. Selon un autre exemple, il y a une ouverture de passage 200 pour plusieurs ouvertures d'étanchéité 300.

Comme cela est visible sur la figure 7a, 7b et la figure 8, le corps d'appui 2 comprend des parois de guidage 204 entourant le passage de sortie de phase 200 pour permettre de guider les sorties de phase dans les ouvertures d'étanchéité 300 du joint d'étanchéité 3 lors du montage des sorties de phase 4 à l'ensemble E. Les parois de guidage 204 sont donc inclinée, par exemple conique, de façon à ce que plus la section du passage de sortie de phase 200 est proche du joint d'étanchéité 3 plus elle est petite.

La figure 9 représente un ensemble E' pour former un interconnecteur E1' visible sur la figure 10, selon un deuxième mode de réalisation. L'ensemble E' et l'interconnecteur E1' sont différents de ceux du premier mode de réalisation en ce qui concerne les caractéristiques décrites dans les paragraphes ci-dessous.

L'interconnecteur étanche E1' comprend un seul logement de connexion 500' par système triphasé, visible sur la figure 10, soit ici un seul réservoir 5' pour six connexions de sorties de phases 4 (représentées aussi sur la figure 9) à une extrémité de connexion 114 (montage en étoile comme dans le premier mode de réalisation) d'une trace (visible en coupe sur la figure 11 ).

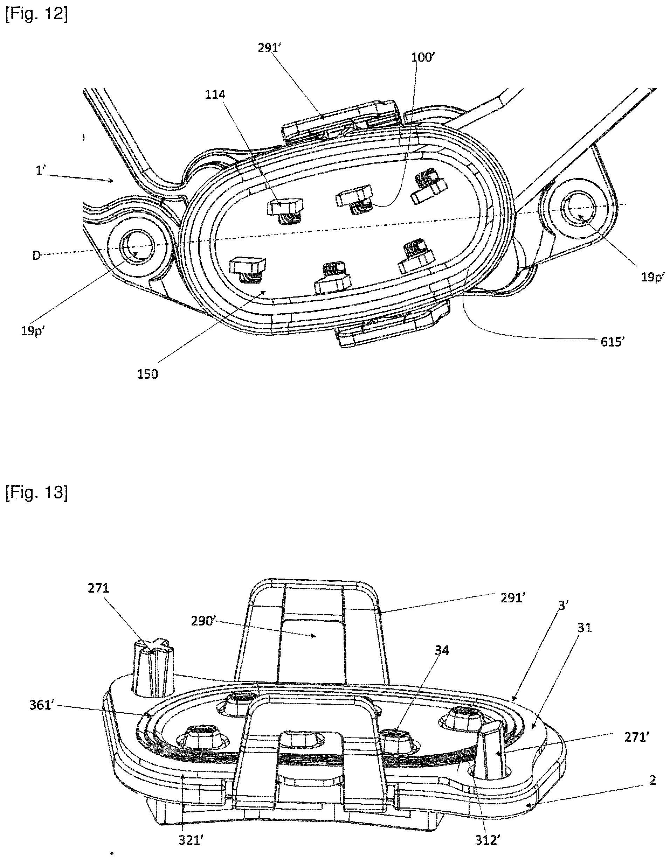

Le corps d'interconnecteur 10' comprend un muret 15 entourant une portion du volume du logement de connexion 500' et une base 150 (référencée sur la figure 12 représentant une vue de dessus d'une partie de l' ensemble interconnecteur E') ouverte sur chacune des ouvertures de logement de connexion 100'. Le corps d'interconnecteur 10' comprend une ouverture de logement de connexion 100' par sortie de phase 4.

La figure 11 représente une coupe de l'ensemble E' au niveau de la portion de volume du logement de connexion 100'. En outre le corps d'interconnecteur 10' comprend des surfaces de guidage 104 pour chaque sortie de phase 4 pour guider la sortie de phase vers l'extrémité de connexion 114. En outre, à la différence par rapport au premier exemple du premier mode de réalisation, chaque ouverture de logement de connexion 100' débouche sur un logement de passe-fils 134.

Le muret 15 comprend une rainure pour recevoir le joint de réservoir 615' pour étanchéifier entre le réservoir 5' et le boitier interconnecteur 1'.

Dans cet exemple, le réservoir 5' est monté serré (ajustement serré) dans la portion du volume du logement de connexion 500'. En particulier, les parois du réservoir 5' comprennent une partie à l'intérieur de la portion du volume du logement de connexion 500' contre la surface interne du muret 15 en écrasant le joint de réservoir 615' et une autre partie sur le muret 15.

Les moyens de fixation pour fixer le réservoir 5' au corps d'interconnecteur 10' comprennent ici une contre-dépouille des parois du réservoir 5' pour être fixée par la résine au corps d'interconnecteur 10'.

L'ensemble E' comprend une connectique par système triphasé pour connecter chaque sortie de connexion 115 destinée à être raccordée à une connectique de l'électronique de puissance.

Les moyens de fixation 19p' du boitier interconnecteur 1' à un palier ou une autre pièce, sont des vis traversant un trou du corps d'interconnecteur 10'. L'interconnecteur E1" n'est donc pas agencé pour un montage à l'aveugle dans ce deuxième mode de réalisation.

Les moyens de fixation 19p' du boitier interconnecteur 1' ont en outre de la fonction de fixer l'ensemble E' à, par exemple, un palier P, une fonction d'exercer une pression sur le joint d'étanchéité 3' par le boitier interconnecteur 1' contre le corps d'appui 2' pris en sandwich entre, dans cet exemple le palier, et le corps d'interconnecteur 10'.

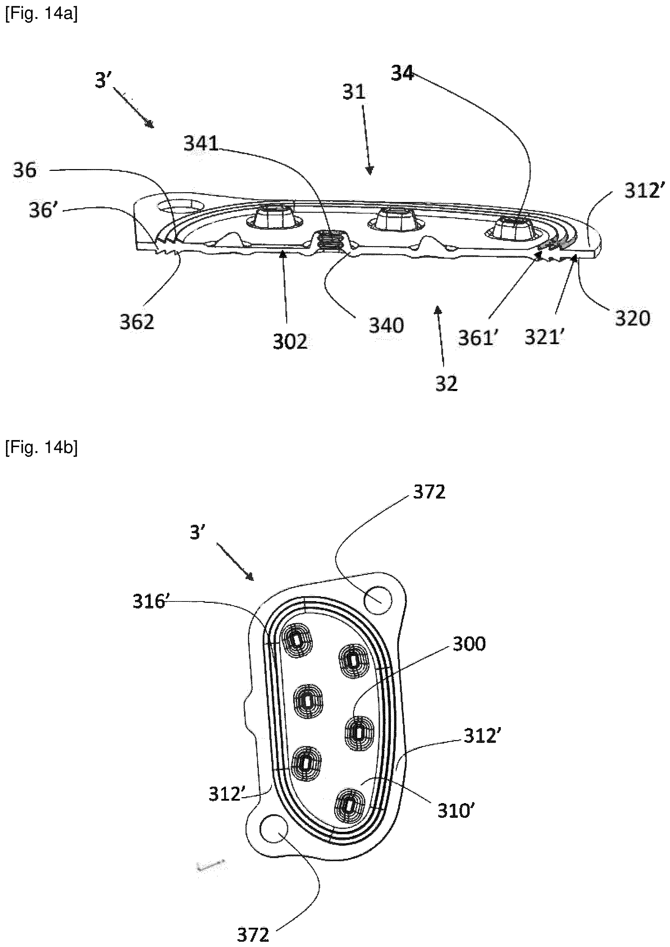

Le joint d'étanchéité 3' est représenté en coupe sur la figure 14a. Le joint d'étanchéité 3' comprend donc une face d'étanchéité 31 en vis-à-vis du boitier interconnecteur 1 comprenant au moins une surface comprimée 316 contre le boitier interconnecteur 1 expliquée dans la suite.

Le joint d'étanchéité 3' comprend donc une face d'appui 32 opposée à la face d'étanchéité 31 en vis-à-vis du corps d'appui 2.

En outre, comme visible sur la figure 12, les deux trous des moyens de fixation 19p' sont situés de telle façon qu'une droite D passant par ces deux trous passe entre les ouvertures d'étanchéité 100' des sortie de phase 4. Ici, la droite D, passe entre trois ouvertures d'étanchéité 100' de trois sorties de phases 4 de trois phases d'un système triphasé et les trois autres ouvertures d'étanchéité 100' des trois autres sorties de phases 4 de ces trois phases. Cela permet d'avoir un appui équilibrer par les moyens de fixations 19P'.

En outre, dans cet exemple de cet ensemble E', les moyens de clipsage 291' du corps d'appui 2' au moyen de clipsage 192' du boitier d'interconnecteur 1' sont différents de ceux du premier mode de réalisation en ce que le joint d'étanchéité 3' est positionné entre les moyens de clipsage 291', 192'. En particulier, les moyens de clipsage 291' du corps d'appui 2' visible sur la figure 13 représentant le corps d'appui 2' et le joint d'étanchéité 3', comprennent une paire de clips, ici en forme de U comprenant une ouverture 290', s'étendant au-delà de la surface du corps d'appui 2' en vis-à-vis du joint d'étanchéité 3'. Les moyens de clipsage 192' du corps d'interconnecteur 10', visible sur les figures 9 et 11, comprennent un crochet par clips pour se fixer à l'intérieur de l'ouverture 290' du clips. Le joint d'étanchéité 3' est donc dépourvu de trou de passage de fixation comme dans le premier mode de réalisation.

Le corps d'appui 2' comprend dans cet exemple, au moins un moyen indexeur 271, 271' du corps d'appui 2' avec le joint d'étanchéité 3' et le boitier d'interconnecteur 1'. Ici en l'occurrence, le corps d'appui 2' comprend dans cet exemple, deux moyens indexeur 271, 271' en forme de doigt, visible sur la figure 13 traversant chacun une ouverture d'indexation 372 (référencée sur la figure 14b) du joint 3' pour rentrer dans un trou du boitier interconnecteur 1'. Cela permet de bien positionner le joint d'étanchéité 3' sur le corps d'appui 2' pour le montage du boitier interconnecteur 1'.

Le corps d'appui 2' comprend dans cet exemple, comme dans l'exemple du premier mode de réalisation, des parois de guidage 204' entourant chaque passage de sortie de phase 200' en vis-à-vis d'une seule ouverture d'étanchéité 300. Cependant, à la différence par rapport au premier exemple du premier mode de réalisation, chaque paroi de guidage 204' débouche sur un logement de passe fil 234. Le logement de passe fil 234 comprend une section plus grande que la plus petite section entre les parois de guidage 204' et forme un creux par rapport à la surface plane 20' du corps d'appui 2', référencée sur la figure 11.

Enfin dans ce mode de réalisation, la zone d'étanchéité entre le corps d'interconnecteur 10' et le joint d'étanchéité 3' est réalisée différemment en ce que le joint d'étanchéité 3' comprend au moins une saillie d'étanchéité 36, représentée par exemple sur les figures 14a, 14b. Dans cet exemple le corps d'interconnecteur 10' est dépourvue de saillie. La portion déformée 361' du joint d'étanchéité 3' comprend donc les saillies d'étanchéité 36 par rapport à la première surface 312' de la portion intermédiaire 321', formant la surface déformée 316'. Dans cet exemple, en option, la portion déformée 361' du joint d'étanchéité 3' comprend en outre des saillies d'appui 36' situées à l'opposé des saillies d'étanchéité 36, formant une deuxième surface déformée 362.

En outre dans cet exemple de mode de réalisation, les saillies d'étanchéité 36, et optionnellement les saillies d'appui 36', entourent l'ensemble des passe-fils 34. La portion déformée 361' entoure une portion de membrane 302 dont d'une part un premier jeu est formé entre la surface de remplissage 310' de cette portion de membrane 302 et le logement des passe-fils 134 du corps d'interconnecteur 1' en vis-à-vis et d'autre part un deuxième jeu entre de cette portion de membrane 302 et le corps d'interconnecteur 2'. Les jeux permettent au joint d'étanchéité 3' de prendre sa forme nécessaire pour aider chaque passe-fil 34 à étanchéifier l'ouverture d'étanchéité 300 traversée par une sortie de phase 4. L'interconnecteur E1' comprend donc de la résine recouvrant cette surface de remplissage 310'.

Un deuxième jeu peut être formé entre une surface d'appui 320 de la portion intermédiaire 321' du côté de la face d'appui 32 opposée à la la première surface 312' du joint d'étanchéité 3' et le corps d'interconnecteur 10', permettant d'assurer que le corps d'interconnecteur 10' comprime les saillies d'étanchéité 36 et optionnellement la saillie d'appui 36'. Un jeu peut aussi être formé entre une surface d'appui 320 de la face d'appui 32' et le corps d'appui 2', permettant d'assurer que le corps d'appui 2 comprime les saillies d'étanchéité 36 formant la surface déformée 362.

Dans cet exemple, la zone d'étanchéité formée par les saillies d'étanchéité 36, 36' entoure l'ensemble des passe-fils 34, du joint d'étanchéité 3'. Il y a donc dans cet exemple qu'une seule zone d'étanchéité formée par les saillies d'étanchéité 36' mais selon un autre exemple il pourrait en avoir plusieurs comme dans l'exemple du premier mode de réalisation en ayant

Les passe-fils 34 sont identiques à ceux du premier mode de réalisation, comprenant une cheminée 341, un soufflet 340 et des lèvres.

Dans ces deux modes de réalisation, l'interconnecteur E1, E1' comprend des réservoirs 5, 5' permettant de protéger la résine, mais l'interconnecteur E1, E1' pourrait être dépourvu de ses réservoirs 5, 5'. En effet, soit le corps d'interconnecteur 10, 10' peut former ses réservoirs 5, 5' (mais le soudage entre la sortie de phase 4 et l'extrémité de connexion 114 est plus difficile). Selon un autre exemple le réservoir est un moule comprenant une dépouille qui est retiré lorsque la résine a durci (dans ce cas la résine n'est plus protégée par le réservoir).

Sauf précision contraire, un même élément apparaissant sur des figures différentes présente une référence unique.

## Revendications

1. Ensemble (E, E') pour un interconnecteur (E1, E1') destiné à être monté sur une pièce de support tel qu'un palier (P) d'une machine électrique (M) refroidie par un liquide, pour connecter des sorties de phase (4) d'un bobinage à une électronique de puissance, comprenant :
- un boitier interconnecteur (1, 1') comprenant :
∘ un corps (10, 10') comprenant au moins une ouverture de logement de connexion (100, 100') traversante destinée à être remplie de résine et traversée par une sortie de phase (4),
∘ au moins une trace (11) par sortie de phase (4), comprenant chacune au moins une extrémité de connexion (114) pour être connectée à la sortie de phase (4) dans un logement de connexion (500, 500'),
- au moins un corps d'appui (2, 2') différent d'un palier, fixé au boitier interconnecteur (1,1') comprenant au moins un passage de sortie de phase (200, 200'),
- au moins un joint d'étanchéité (3, 3') monté comprimé entre le corps d'appui (2, 2') et le boitier interconnecteur (1,1') et comprenant :
o au moins une ouverture d'étanchéité (300) de sortie de phase en vis-à-vis d'un passage de sortie de phase (200, 200') et en vis-à-vis d'une ouverture de logement de connexion (100, 100') du boitier d'interconnecteur (1,'1).

2. Ensemble (E, E') selon la revendication précédente, dans lequel le corps d'appui (2, 2') comprend des parois de guidage (204, 204') entourant le passage de sortie de phase (200, 200') en vis-à-vis d'une seule ouverture d'étanchéité (300).

3. Ensemble (E, E') selon l'une quelconque des revendications précédentes, dans lequel le corps d'appui (2, 2') comprend des moyens de clipsage (291, 291') et le boitier d'interconnecteur (1) comprend des moyens de clipsage (192, 192') complémentaire, pour être fixé l'un à l'autre.

4. Ensemble (E) selon la revendication précédente, dans lequel le joint d'étanchéité (3) comprend des ouvertures (390) traversées par les moyens de clipsages (192) pour fixer le corps d'appui (2) au boitier d'interconnecteur (1) en comprimant le joint d'étanchéité (3).

5. Ensemble (E') selon la revendication 4, dans lequel le joint d'étanchéité (3') est positionné entre les moyens de clipsage (291', 192').

6. Ensemble (E) selon l'une des revendications précédentes, dans lequel le boitier d'interconnecteur (1) comprend une rainure (165) de joint entourant l'ouverture de logement de connexion (100), à l'opposé du joint d'étanchéité (3), pour recevoir un joint de réservoir (615) pour étanchéifier un logement de connexion (500) d'un réservoir (5) monté sur le boitier interconnecteur (1).

7. Ensemble (E') selon l'une des revendications 1 à 6, dans lequel le boitier d'interconnecteur (1') comprend un muret formant une portion du volume du logement de connexion (500') et une base (150) ouverte sur chacune des ouvertures de logement de connexion (100') ainsi qu'une rainure de joint entourant cette portion de volume de logement de réservoir (500'), pour recevoir un joint de réservoir (615') pour étanchéifier un logement de connexion (500') d'un réservoir (5') monté sur le boitier interconnecteur (1').

8. Ensemble (E, E') selon la revendication précédente, comprenant en outre :
- un réservoir (5, 5') destiné à être monté sur le corps interconnecteur (10, 10') comprenant un volume prolongeant l'ouverture de logement de connexion (100, 100') pour entourer une soudure entre la sortie de phase (4) et l'extrémité de connexion (114) et être remplie de résine et en ce que le réservoir (5, 5') comprend des moyens de fixation (591) pour être fixé au corps d'interconnecteur (10, 10').

9. Machine électrique (M,) comprenant :
- l'ensemble (E, E') selon l'une des revendications précédentes,
- un stator (S) comprenant des sorties de phases (4) traversant chacune l'au moins un passage de sortie de phase (200) correspondant, l'ouverture d'étanchéité (300) correspondante et l'au moins une ouverture de logement de connexion (100) correspondant, dans lequel chaque extrémité de sortie de phase (4) est fixée à une extrémité de connexion (114) correspondante,
- de la résine comblant l'ouverture de logement de connexion (100) en contact avec le joint d'étanchéité (3) formant un interconnecteur étanche (E1, E1').

10. Machine électrique (M) selon la revendication précédente, dans lequel l'interconnecteur étanche (E1, E1') comprend un réservoir (5) fixé sur le boitier d'interconnecteur (1) formant un logement de connexion (500) entourant au moins une sortie de phase (4) fixée à une extrémité de connexion (114) correspondante, le logement de connexion (500) étant remplie de résine.

## Patentansprüche

1. Anordnung (E, E') für ein Verbindungselement (E1, E1'), das dazu bestimmt ist, an einem Stützteil, wie etwa einem Lager (P) einer durch eine Flüssigkeit gekühlten elektrischen Maschine (M), montiert zu sein, um Phasenausgänge (4) einer Wicklung mit einer Leistungselektronik zu verbinden, beinhaltend:
- ein Verbindungselementgehäuse (1, 1'), beinhaltend:
o einen Körper (10, 10'), der mindestens eine durchgehende Verbindungsaufnahmeöffnung (100, 100') beinhaltet, die dazu bestimmt ist, mit Harz gefüllt zu sein und von einem Phasenausgang (4) durchquert zu werden,
o mindestens eine Bahn (11) pro Phasenausgang (4), die jeweils mindestens ein Verbindungsende (114) beinhaltet, um in einer Verbindungsaufnahme (500, 500') mit dem Phasenausgang (4) verbunden zu sein,
- mindestens einen Auflagekörper (2, 2'), der sich von einem Lager unterscheidet, der an dem Verbindungselementgehäuse (1, 1') befestigt ist und mindestens einen Phasenausgangsdurchgang (200, 200') beinhaltet,
- mindestens eine Dichtung (3, 3'), die zwischen dem Auflagekörper (2, 2') und dem Verbindungselementgehäuse (1, 1') komprimiert montiert ist und Folgendes beinhaltet:
o mindestens eine Abdichtungsöffnung (300) für einen Phasenausgang gegenüber einem Phasenausgangsdurchgang (200, 200') und gegenüber einer Verbindungsaufnahmeöffnung (100, 100') des Verbindungselementgehäuses (1, 1').

2. Anordnung (E, E') nach dem vorhergehenden Anspruch, wobei der Auflagekörper (2, 2') Führungswände (204, 204') beinhaltet, die den Phasenausgangsdurchgang (200, 200') gegenüber einer einzelnen Abdichtungsöffnung (300) umgeben.

3. Anordnung (E, E') nach einem der vorhergehenden Ansprüche, wobei der Auflagekörper (2, 2') Clipsmittel (291, 291') beinhaltet und das Verbindungselementgehäuse (1) komplementäre Clipsmittel (192, 192') beinhaltet, um aneinander befestigt zu werden.

4. Anordnung (E) nach dem vorhergehenden Anspruch, wobei die Dichtung (3) Öffnungen (390) beinhaltet, die von den Clipsmitteln (192) durchquert werden, um den Auflagekörper (2) an dem Verbindungselementgehäuse (1) zu befestigen und dabei die Dichtung (3) zu komprimieren.

5. Anordnung (E') nach Anspruch 4, wobei die Dichtung (3') zwischen den Clipsmitteln (291', 192') positioniert ist.

6. Anordnung (E) nach einem der vorhergehenden Ansprüche, wobei das Verbindungselementgehäuse (1) gegenüber der Dichtung (3) eine Dichtungsnut (165) beinhaltet, die die Verbindungsaufnahmeöffnung (100) umgibt, um eine Behälterdichtung (615) zur Abdichtung einer Verbindungsaufnahme (500) eines Behälters (5), der an dem Verbindungselementgehäuse (1) montiert ist, aufzunehmen.

7. Anordnung (E') nach einem der Ansprüche 1 bis 6, wobei das Verbindungselementgehäuse (1') eine Trennwand, die einen Abschnitt des Volumens der Verbindungsaufnahme (500') bildet, und eine Basis (150), die für jede der Verbindungsaufnahmeöffnungen (100') geöffnet ist, sowie eine Dichtungsnut, die diesen Volumenabschnitt zur Aufnahme des Behälters (500') umgibt, um eine Behälterdichtung (615') zur Abdichtung einer Verbindungsaufnahme (500') eines Behälters (5'), der an dem Verbindungselementgehäuse (1') montiert ist, aufzunehmen, beinhaltet.

8. Anordnung (E, E') nach dem vorhergehenden Anspruch, ferner beinhaltend:
- einen Behälter (5, 5'), der dazu bestimmt ist, an dem Verbindungselementkörper (10, 10') montiert zu sein, und ein Volumen beinhaltet, das die Verbindungsaufnahmeöffnung (100, 100') verlängert, um eine Schweißnaht zwischen dem Phasenausgang (4) und dem Verbindungsende (114) zu umgeben und mit Harz gefüllt zu sein, und dass der Behälter (5, 5') Befestigungsmittel (591) zur Befestigung an dem Verbindungselementkörper (10, 10') beinhaltet.

9. Elektrische Maschine (M), beinhaltend:
- die Anordnung (E, E') nach einem der vorhergehenden Ansprüche,
- einen Stator (S), der Phasenausgänge (4) beinhaltet, die jeweils den mindestens einen entsprechenden Phasenausgangsdurchgang (200), die entsprechende Abdichtungsöffnung (300) und die mindestens eine entsprechende Verbindungsaufnahmeöffnung (100) durchqueren, wobei jedes Phasenausgangsende (4) an einem entsprechenden Verbindungsende (114) befestigt ist,
- Harz, das die Verbindungsaufnahmeöffnung (100) in Kontakt mit der Dichtung (3) verschließt und ein dichtes Verbindungselement (E1, E1') bildet.

10. Elektrische Maschine (M) nach dem vorhergehenden Anspruch, wobei das dichte Verbindungselement (E1, E1') einen Behälter (5) beinhaltet, der an dem Verbindungselementgehäuse (1) befestigt ist und eine Verbindungsaufnahme (500) bildet, die mindestens einen Phasenausgang (4) umgibt, der an einem entsprechenden Verbindungsende (114) befestigt ist, wobei die Verbindungsaufnahme (500) mit Harz gefüllt ist.

## Claims

1. Assembly (E, E') for an interconnector (E1, E1') intended to be mounted on a support piece such as a bearing (P) of a liquid-cooled electric machine (M), for connecting phase outputs (4) of a winding to an item of power electronics, comprising:
- an interconnector housing (1, 1') comprising:
∘ a body (10, 10') comprising at least one connection recess through-opening (100, 100') intended to be filled with resin and passed through by a phase output (4),
∘ at least one track (11) per phase output (4), each comprising at least one connection end (114) so that it can be connected to the phase output (4) in a connection recess (500, 500'),
- at least one bearing body (2, 2') that is different from a bearing, fastened to the interconnector housing (1, 1') comprising at least one phase output passage (200, 200'),
- at least one sealing gasket (3, 3') mounted compressed between the bearing body (2, 2') and the interconnector housing (1, 1') and comprising:
∘ at least one phase output sealing opening (300), facing a phase output passage (200, 200') and facing a connection recess opening (100, 100') of the interconnector housing (1, 1').

2. Assembly (E, E') according to the preceding claim, wherein the bearing body (2, 2') comprises guide walls (204, 204') surrounding the phase output passage (200, 200') facing a single sealing opening (300).

3. Assembly (E, E') according to any one of the preceding claims, wherein the bearing body (2, 2') comprises clip-fastening means (291, 291') and the interconnector housing (1) comprises complementary clip-fastening means (192, 192'), so that they can be fastened to one another.

4. Assembly (E) according to the preceding claim, wherein the sealing gasket (3) comprises openings (390) passed through by the clip-fastening means (192) so as to fasten the bearing body (2) to the interconnector housing (1), compressing the sealing gasket (3).

5. Assembly (E') according to Claim 4, wherein the sealing gasket (3') is positioned between the clip-fastening means (291', 192').

6. Assembly (E) according to one of the preceding claims, wherein the interconnector housing (1) comprises a gasket groove (165) surrounding the connection recess opening (100), opposite the sealing gasket (3), for receiving a reservoir gasket (615) for sealing a connection recess (500) of a reservoir (5) mounted on the interconnector housing (1).

7. Assembly (E') according to one of Claims 1 to 6, wherein the interconnector housing (1') comprises a low wall forming a portion of the volume of the connection recess (500') and a base (150) that is open onto each of the connection recess openings (100') and a gasket groove surrounding this portion of volume of reservoir recess (500'), for receiving a reservoir gasket (615') for sealing a connection recess (500') of a reservoir (5') mounted on the interconnector housing (1').

8. Assembly (E, E') according to the preceding claim, further comprising:
- a reservoir (5, 5') intended to be mounted on the interconnector body (10, 10') comprising a volume extending the connection recess opening (100, 100') so as to surround a soldered connection between the phase output (4) and the connection end (114) and be filled with resin and in that the reservoir (5, 5') comprises fastening means (591) so that it can be fastened to the interconnector body (10, 10').

9. Electric machine (M,) comprising:
- the assembly (E, E') according to one of the preceding claims,
- a stator (S) comprising phase outputs (4) each passing through the at least one corresponding phase output passage (200), the corresponding sealing opening (300) and the at least one corresponding connection recess opening (100), wherein each phase output (4) end is fastened to a corresponding connection end (114),
- resin filling the connection recess opening (100) in contact with the sealing gasket (3) forming a sealed interconnector (E1, E1').

10. Electric machine (M) according to the preceding claim, wherein the sealed interconnector (E1, E1') comprises a reservoir (5) fastened to the interconnector housing (1) forming a connection recess (500) surrounding at least one phase output (4) fastened to a corresponding connection end (114), the connection recess (500) being filled with resin.
